# EUROPÄISCHE PATENTSCHRIFT

(11) **EP 1 937 925 B1**
(45) Veröffentlichungstag und Bekanntmachung des Hinweises auf die Patenterteilung: **21.04.2010**
(21) Anmeldenummer: 06793273.1
(22) Anmeldetag: 06.09.2006
(51) Int. Cl.: E05F 15/16, F16H 57/02

(54) **GETRIEBEEINHEIT FÜR EINEN KRAFTFAHRZEUG-STELLANTRIEB**
GEAR MECHANISM UNIT FOR A MOTOR VEHICLE ACTUATING DRIVE
ENSEMBLE TRANSMISSION CONÇU POUR UN MECANISME DE COMMANDE DE VEHICULE AUTOMOBILE

(30) Priorität: 12.10.2005 DE 102005048888
(43) Veröffentlichungstag der Anmeldung: 02.07.2008
(73) Patentinhaber: Brose Fahrzeugteile GmbH & Co. KG, Würzburg, 97076 Würzburg (DE)
(72) Erfinder: HENIG, Margit, 97228 Rottendorf (DE); KLINGLER, Peter, 97277 Neubrunn (DE); GREULICH, Jürgen, 97084 Würzburg (DE)
(74) Vertreter: Reinhard - Skuhra - Weise & Partner GbR
(86) Internationale Anmeldenummer: PCT/EP2006/066071
(87) Internationale Veröffentlichungsnummer: WO 2007/042357

(56) Entgegenhaltungen:
- DE-A1- 3 519 056
- DE-U1- 8 812 399
- DE-U1- 9 311 529
- DE-U1- 29 513 701
- US-A- 6 003 397

## Beschreibung

Die Erfindung betrifft eine Getriebeeinheit für einen Kraftfahrzeug-Stellantrieb.

Getriebeeinheiten für einen Kraftfahrzeug-Stellantrieb sind bereits bekannt. Sie weisen ein Getriebegehäuse mit einer fest damit verbundenen Achse auf, auf welcher ein Schneckenrad drehbar gelagert ist. Das Schneckenrad weist an seinem Außenumfang eine Verzahnung auf, die mit einer Schneckenwelle kämmt, die ihrerseits von einer Motorwelle angetrieben wird oder eine Einheit mit der Motorwelle bildet.

Derartige Getriebeeinheiten kommen beispielsweise im Zusammenhang mit Fensterheberantrieben zum Einsatz. Das Getriebegehäuse bekannter Getriebeeinheiten besteht oftmals aus PBT, d. h. einem Kunststoff mit einem 30%-igen Anteil von Kurzglasfasern. Die mit dem Getriebegehäuse verbundene Achse besteht in vielen Fällen aus Stahl, um den im Betrieb aufgrund der Verzahnungskräfte auftretenden Deformationen der Achse vorzubeugen.

Aus der DE 35 19 056 C2 ist eine Fensterheber-Antriebseinheit bekannt, die insbesondere für einen Seil-Fensterheber vorgesehen ist. Diese bekannte Antriebseinheit weist ein Gehäuse auf, in welchem ein von einem Antriebsmotor angetriebenes Schneckenrad und ein vom Schneckenrad mitgenommenes Abtriebsglied vorgesehen sind. Weiterhin ist ein an einem der Wandteile des Gehäuses gehalterter Lagerbolzen für das Schneckenrad vorgesehen. Der Lagerbolzen ist in einer Lagerbuchse platziert, die mit dem Wandteil vernietet ist. Auf der Außenumfangsfläche der Lagerbuchse ist das Abtriebsglied oder das Schneckenrad gehaltert. Weiterhin ist die bekannte Antriebseinheit mit einer Sicherung versehen, die die Lagerbuchse gegen ein Abziehen des Abtriebsgliedes bzw. Schneckenrades von der Lagerbuchse sichert.

Weiterhin ist aus der DE 88 12 399 U1 ein Fensterheberantrieb bekannt. Dieser weist ein Getriebegehäuse auf, in welchem auf einer mit dem Getriebegehäuse fest verbundenen Achse ein von einem elektrischen Antriebsmotor angetriebenes Schneckenrad drehbar gelagert ist. Weiterhin ist das Schneckenrad über eine koaxial ebenfalls auf der Achse drehbar vorgelagerte Mitnahmescheibe über axial vorstehende Mitnahmenocken in Drehmitnahme mit einem Abtriebsglied zur Auf-Ab-Bewegung eines Fensters gestellt. Weiterhin ist eine Mitnahmescheibe vorgesehen, die einen an ihrer dem Schneckenrad abgewandten Stirnseite axial vorstehenden, die Achse konzentrisch umgebenden Wellenbund aufweist. Dieser hat eine Außenrasterung zur formschlüssigen Drehmitnahme sowohl einer Seilscheibe eines Seilfensterhebers als auch eines Antriebsritzels eines Arm- bzw. Scherenfensterhebers. Die Seilscheibe bzw. das Antriebsritzel sind mit einer zur Außenrasterung des Wellenbundes korrespondierenden Innenrasterung versehen. Durch diese Maßnahmen soll bei einfacher und für eine Automatenfertigung geeigneter Konstruktion der Bauteileaufwand für Seilfensterheber und Arm- bzw. Scherenfensterheber reduziert werden.

Ferner ist aus der DE 295 13 701 U1 eine Motor-Getriebe-Antriebseinheit bekannt, die insbesondere als Kraftfahrzeug-Fensterheberantrieb verwendet werden kann. Diese bekannte Einheit weist ein Getriebegehäuse auf, welches eine Aufnahme für eine Schneckenrad-Achse hat, auf welcher ein Schneckenrad lagerbar ist.

Die Aufgabe der Erfindung besteht darin, eine neue Getriebeeinheit anzugeben, bei welcher es im Betrieb trotz Auftretens hoher Verzahnungskräfte nicht zu einer Deformation der mit dem Getriebegehäuse verbundenen Achse kommt.

Diese Aufgabe wird durch eine Getriebeeinheit mit den im Anspruch 1 angegebenen Merkmalen gelöst. Vorteilhafte Ausgestaltungen und Weiterbildungen der Erfindung ergeben sich aus den abhängigen Ansprüchen 2 - 7.

Die Vorteile einer Getriebeeinheit mit den im Anspruch 1 angegebenen Merkmalen bestehen darin, dass aufgrund der Vergrößerung des Durchmessers der Achse im axialen Bereich der Verzahnung die im Betrieb auftretende Flächenpressung auf eine größere Fläche verteilt und damit verringert wird. Dadurch wird ein Auftreten von Deformationen der Achse verhindert.

Ferner wird durch die im Anspruch 1 angegebene Verrippung die aus dem Getriebegehäuse, der Achse und dem Schneckenrad bestehende Getriebeeinheit weiter stabilisiert.

Sind das Getriebegehäuse und die Achse - wie es im Anspruch 2 angegeben ist - in Form eines einstückigen Kunstoffformteils realisiert, welches aus einem Kunststoffmaterial mit hohem Zugmodul besteht, dann kann auf die Verwendung einer Stahlachse verzichtet werden. Dies vereinfacht den Herstellungsprozess, da beim Spritzgiessprozess keine Stahlachse eingelegt bzw. berücksichtigt werden muss. Ein weiterer Vorteil der Merkmale des Anspruchs 2 besteht darin, dass das Gewicht des Getriebegehäuses deutlich reduziert ist.

Wird als Kunststoffmaterial mit hohem Zugmodul Polypropylen mit einer Langglasfasereinlage verwendet, wie es im Anspruch 3 angegeben ist, dann können Materialkosten in Höhe von etwa 20% eingespart werden, da Polypropylen mit einer Langglasfasereinlage bei vergleichbaren mechanischen Eigenschaften und Materialpreis pro Kilogramm eine um etwa 20% geringere Dichte aufweist.

Vorzugsweise ist das Schneckenrad in seinem Kontaktbereich mit der Achse facettiert ausgebildet. Dies hat den Vorteil einer besseren Herstellbarkeit und einer verbesserten Schmierung im Betrieb.

In vorteilhafter Weise dient der im vergrößerten Durchmesserbereich der Achse vorgesehene innere Ring als Anlagefläche für einen Dichtring. Dies hat im Vergleich zu bekannten Getriebeeinheiten den Vorteil, dass ein Sicherungselement und eine Scheibe zur Axialsicherung des Dichtrings entfallen können.

Weitere vorteilhafte Eigenschaften der Erfindung ergeben sich aus deren beispielhafter Erläuterung anhand der Figuren. Es zeigt
- Figur 1: ein Ausführungsbeispiel für-das Getriebegehäuse einer Getriebeeinheit,
- Figur 2: ein Ausführungsbeispiel für ein Schneckenrad, das in das Getriebegehäuse gemäß Figur 1 einsetzbar ist, und
- Figur 3: einen Getriebedeckel.

Eine Getriebeeinheit gemäß der Erfindung ist zur Verwendung bei einem Kraftfahrzeug-Stellantrieb vorgesehen, beispielsweise einem Fensterheberantrieb. Sie weist ein Getriebegehäuse,eine mit dem Getriebegehäuse fest verbundene Achse, ein Schneckenrad, welches an seinem Außenumfang mit einer Verzahnung versehen ist, und einen Getriebedeckel auf.

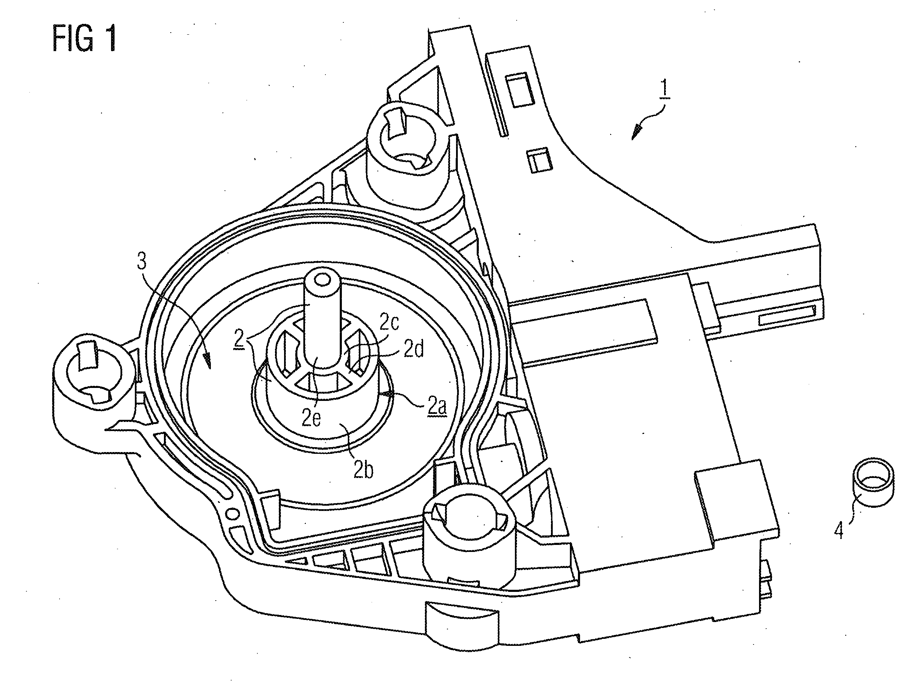

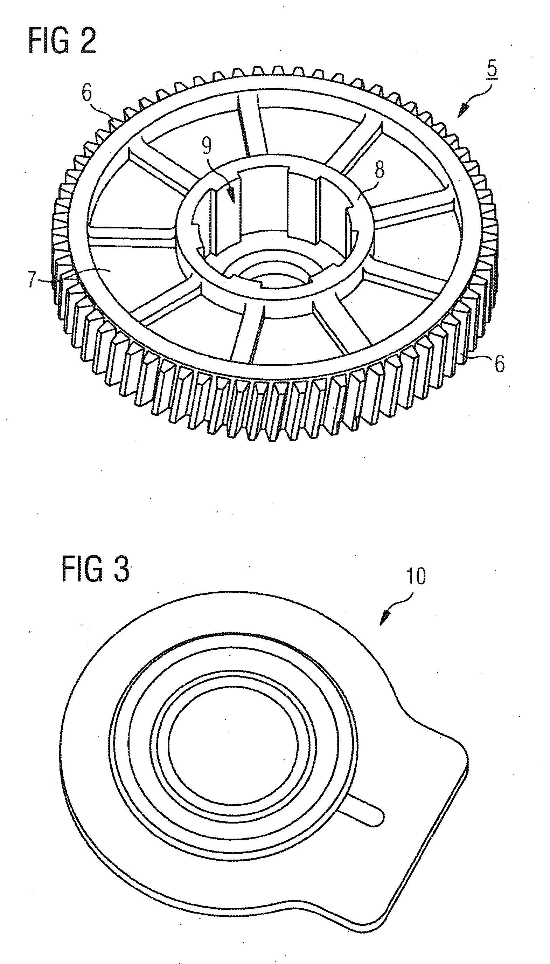

Die Figur 1 zeigt ein Ausführungsbeispiel für das Getriebegehäuse einer Getriebeeinheit gemäß der Erfindung. Das dargestellte Getriebegehäuse 1 ist ein einstückiges, mittels eines Spritzgießvorganges hergestelltes Kunststoffformteil. Bestandteil dieses Kunststoffformteils ist unter anderem die Achse 2, auf welcher bei zusammengebauter Getriebeeinheit das Schneckenrad platziert ist. Zur Aufnahme des Schneckenrades, welches in der Figur 2 dargestellt ist, weist das Getriebegehäuse 1 eine Aussparung 3 auf.

Weiterhin weist die Achse 2 in ihrem axialen Bereich, welcher zur Aufnahme des Schneckenrades vorgesehen ist, einen größeren Durchmesser auf als in ihren anderen axialen Bereichen. Dieser vergrößerte Durchmesserbereich der Achse 2 ist in der Figur 1 mit der Bezugszahl 2a bezeichnet. Der vergrößerte Durchmesserbereich 2a weist einen äußeren Ring 2b, einen inneren Ring 2c und den äußeren Ring mit dem inneren Ring verbindende, radial gerichtete Stabilisierungsrippen 2d auf. Der innere Ring 2c dient als Anlagefläche für einen Dichtring 4, der in der Figur 1 unten rechts dargestellt ist.

Die Figur 2 zeigt ein Ausführungsbeispiel für ein Schneckenrad 5, das beim Zusammenbau der Getriebeeinheit in die Aussparung 3 des Getriebegehäuses 1 eingesetzt wird. Das Schneckenrad 5 weist an seinem Außenumfang eine Verzahnung 6 auf. Diese Verzahnung 6 kämmt im Betrieb mit einer Schneckenwelle, die Ihrerseits von einer Motorwelle angetrieben wird oder eine Einheit mit der Motorwelle bildet. Die Verzahnung 6 ist über einen Schneckenradkörper 7, welcher ebenfalls radial gerichtete Rippen aufweist, mit einem inneren Schneckenradring 8 verbunden. Die Innenfläche dieses inneren Schneckenradringes 8 dient als Laufbereich und kommt beim Einsetzen des Schneckenrades 5 in das Getriebegehäuse 1 in Kontakt mit der Außenfläche des äußeren Ringes 2b des vergrößerten Durchmesserbereiches 2a der Achse 2.

Die Innenfläche 9 des inneren Schneckenradringes 8, d. h. die Lauffläche des Schneckenrades 5, ist vorzugsweise facettiert ausgebildet. Diese Facetten 9 können durch einen Schleifvorgang oder im Rahmen des Spritzgießvorganges erzeugt werden. Die Vorteile einer derartigen facettierten Ausbildung der Lauffläche des Schneckenrades bestehen in einer besseren Herstellbarkeit des Schneckenrades, da keine hochgenaue runde Innenfläche bereitgestellt werden muss, und in einer verbesserten Schmierung des Laufbereiches im Betrieb der Getriebeeinheit.

Bei dem in der Figur 2 dargestellten Schneckenrad handelt es sich um ein einstückiges Bauteil aus Polyacetal (POM) oder einem Werkstoff mit ähnlichen Eigenschaften, das im Rahmen eines Spritzgießvorganges hergestellt werden kann.

Der Vorteil eines Getriebegehäuses mit im axialen Bereich des Schneckenrades durchmesservergrößerter Achse besteht darin, dass die im Betrieb der Getriebeeinheit auf die Achse wirkenden Verzahnungskräfte nicht zu Deformationen der Achse führen. Dadurch wird sichergestellt, dass ein sicheres Kämmen der Außenverzahnung des Schneckenrades mit der Schneckenwelle auch bei langjährigem Betrieb der Getriebeeinheit gewährleistet ist.

Dieser Vorteil kann dadurch vergrößert werden, dass das Getriebegehäuse 1, bei dem es sich um ein einstückiges Kunststoffformteil handelt, aus einem Kunststoffmaterial besteht, das ein hohes Zugmodul aufweist. Vorzugsweise liegt das Zugmodul in einem Bereich größer als 9000 Megapascal. Vorzugsweise wird gemäß der vorliegenden Erfindung Polypropylen mit einer Langglasfasereinlage verwendet. Dieses hat bei vergleichbaren mechanischen Eigenschaften und gleichem Materialpreis pro Kilogramm eine um etwa 20% geringere Dichte als PBT mit 30% Kurzglasfaser. Dadurch verringern sich die Materialkosten um 20%.

Weitere Vorteile der Erfindung bestehen darin, dass im Vergleich zu bekannten Getriebegehäusen mit Stahlachse eine Gewichtsreduzierung erzielt wird. Ferner entfällt die Notwendigkeit eines Sicherungselementes und einer Scheibe zur Axialsicherung des Dichtrings, da das Schneckenrad durch einen aufgesetzten Getriebedeckel 10 axial gesichert werden kann. Ein Beispiel für einen derartigen Getriebedeckel 10 ist in der Figur 3 gezeigt. Dieser Getriebedeckel weist einen umlaufenden Vorsprung auf, der in einer zugehörigen umlaufenden Nut des Getriebegehäuses zum Liegen kommt und dort verklemmt wird.

Der Durchmesser der Achse 2 in ihrem axialen Bereich 2e, der in der Figur 1 oberhalb des durchmesservergrößerten Bereiches 2a liegt, ist vorzugsweise so gewählt, dass er mit dem Durchmesser bekannter Achsen übereinstimmt. Dies hat den Vorteil, dass die abtriebsseitige Kundenschnittstelle im Vergleich zu bekannten Getriebeeinheiten nicht verändert werden muss.

## Patentansprüche

1. Getriebeeinheit für einen Kraftfahrzeugstellantrieb, welche ein Getriebegehäuse (1), eine mit dem Getriebegehäuse fest verbundene Achse (2) und ein Schneckenrad (5), welches an seinem Aussenumfang mit einer Verzahnung (6) versehen ist, aufweist, **dadurch gekennzeichnet, dass** die Achse (2) in ihrem axialen Bereich, der zum Aufsetzen des Schneckenrades vorgesehen ist, einen im Vergleich zu ihren anderen axialen Bereichen (2e) vergrösserten Durchmesserbereich (2a) aufweist, wobei die Achse in ihrem vergrösserten Durchmesserbereich (2a) mit einem Aussenring (2b), einem Innenring (2c) und den Aussenring mit dem Innenring verbindende, radial gerichtete Stabilisierungsrippen (2d) versehen ist.

2. Getriebeeinheit nach Anspruch 1, **dadurch gekennzeichnet, dass** das Getriebegehäuse und die Achse ein einstückiges Kunststoffformteil sind und aus demselben Kunststoffmaterial bestehen und dass das Kunststoffmaterial ein hohes Zugmodul aufweist.

3. Getriebeeinheit nach Anspruch 2, **dadurch gekennzeichnet, dass** das Kunststoffmaterial Polypropylen mit einer Langglasfasereinlage ist.

4. Getriebeeinheit nach Anspruch 2, **dadurch gekennzeichnet, dass** das Kunststoffmaterial PET ist.

5. Getriebeeinheit nach einem der vorhergehenden Ansprüche, **dadurch gekennzeichnet, dass** die Lauffläche des Schneckenrades (5) mit Facetten (9) versehen ist.

6. Getriebeeinheit nach einem der vorhergehenden Ansprüche, **dadurch gekennzeichnet, dass** der innere Ring (2c) als Anlagefläche für einen Dichtring dient.

7. Getriebeeinheit nach einem der vorhergehenden Ansprüche, **dadurch gekennzeichnet, dass** das aufgesetzte Schneckenrad durch einen aufgesetzten Getriebedeckel (10) axial gesichert ist.

## Claims

1. Gear mechanism unit for a motor vehicle actuating drive, which gear mechanism unit has a gear mechanism housing (1), an axle (2) which is fixedly connected to the gear mechanism housing and a worm wheel (5) which is provided on its outer circumference with a toothing (6), **characterized in that** the axle (2), in its axial region provided for mounting the worm wheel, has a region (2a) of larger diameter than its other axial regions (2e), wherein the axle is provided in its enlarged diameter region (2a) with an outer ring (2b), an inner ring (2c) and radially aligned stabilizing ribs (2d) which connect the outer ring to the inner ring.

2. Gear mechanism unit according to Claim 1,
**characterized in that** the gear mechanism housing and the axle are a single-piece plastic moulded part and are composed of the same plastic material and **in that** the plastic material has a high tensile modulus.

3. Gear mechanism unit according to Claim 2,
**characterized in that** the plastic material is polypropylene with a long glass fibre reinforcement.

4. Gear mechanism unit according to Claim 2,
**characterized in that** the plastic material is PET.

5. Gear mechanism unit according to one of the preceding claims, **characterized in that** the running surface of the worm wheel (5) is provided with facets (9).

6. Gear mechanism unit according to one of the preceding claims, **characterized in that** the inner ring (2c) serves as a contact surface for a sealing ring.

7. Gear mechanism unit according to one of the preceding claims, **characterized in that** the mounted worm wheel is secured axially by a mounted gear mechanism cover (10).

## Revendications

1. Ensemble transmission conçu pour un mécanisme de commande de véhicule automobile, qui présente un carter de transmission (1), un axe (2) solidement relié avec le carter de transmission, et une roue hélicoïdale (5) dotée d'une denture (6) sur sa circonférence extérieure, **caractérisé par le fait que** l'axe (2) dans sa zone axiale, prévue pour le montage de la roue hélicoïdale, présente une zone diamétrale (2a) relativement plus grande que celle se trouvant dans les autres zones axiales (2e), l'axe dans sa zone diamétrale (2a) plus grande étant pourvue d'une bague extérieure (2b), d'une bague intérieure (2c) et de nervures de stabilisation (2d) orientées radialement reliant la bague extérieure à la bague intérieure (2d).

2. Ensemble transmission selon la revendication 1, **caractérisé par le fait que** le carter de transmission et l'axe sont un moulage plastique en une seule pièce et sont constitués du même matériau plastique et que le matériau plastique présente un module de traction élevé.

3. Ensemble transmission selon la revendication 2, **caractérisé par le fait que** le matériau plastique est du polypropylène muni d'un insert en longues fibres de verre.

4. Ensemble transmission selon la revendication 2, **caractérisé par le fait que** le matériau plastique est du PET.

5. Ensemble transmission selon l'une des revendications précédentes, **caractérisé par le fait que** la surface de roulement de la roue hélicoïdale (5) est pourvue de facettes (9).

6. Ensemble transmission selon l'une des revendications précédentes, **caractérisé par le fait que** la bague intérieure (2c) sert de surface d'appui pour une bague d'étanchéité.

7. Ensemble transmission selon l'une des revendications précédentes, **caractérisé par le fait que** la roue hélicoïdale montée est sécurisée axialement par un couvercle de transmission (10) monté.
